Europäisches Patentamt

European Patent Office

Office européen des brevets

(19)

(11) Publication number: **0 434 876 A1**

# EUROPEAN PATENT APPLICATION

(21) Application number: **89313709.1**

(22) Date of filing: **29.12.89**

(51) Int. Cl.5: **G06F 15/30**

(43) Date of publication of application:
**03.07.91 Bulletin 91/27**

(84) Designated Contracting States:
**CH DE FR GB LI**

(71) Applicant: **PAXLEA LIMITED**
**26 Fitzwilliam Place**
**Dublin 2(IE)**

(72) Inventor: **Bond, Anthony**
**210 Grange Road**
**Rathfarnham Dublin 2(IE)**

(74) Representative: **Prutton, Roger et al**
**MARKS & CLERK Alpha Tower Suffolk Street**
**Queensway**
**Birmingham B1 1TT(GB)**

(54) A computer system for unit trust processing functions.

(57) A computer systems having a number of operations computers arranged in a cluster for free access to memory. Data transmitted to remote users is encrypted and decrypted to prevent unauthorised access and confidentiality databases are stored on memory of the cluster for confidentiality within an organisation.

Fig.1

EP 0 434 876 A1

## A COMPUTER SYSTEM FOR UNIT TRUST PROCESSING FUNCTIONS

The present invention relates to a computer system for carrying out unit trust processing functions for host organisations such as investment banks.

One of the primary requirements of a unit trust system is that information may be accessed only by authorised persons. In this case, unauthorised persons include not only outsiders, but also some employees within the host organisation. For example, employees working for some clients should not be allowed access information relating to other clients, or otherwise a conflict of interest situation may arise. Presently available computer systems (such as that described in European Patent Specification No. 278,132 A1) for carrying out similar or related functions do not appear to provide for maintaining confidentiality of information either when stored or when transmitted between computers and interface devices.

Other requirements are that the computer system be efficiently used, while at the same time allowing for continued operation of the functions in the event of hardware or software faults occurring.

Previous attempts at preventing unauthorised access to information have involved limiting user access to certain computers and having dedicated memory devices. While this approach may help to maintain confidentiality, the computer installations are generally used inefficiently and breakdowns may disrupt operation of the system.

The present invention is directed towards providing an improved computer system to overcome these problems.

According to the invention, there is provided a computer system comprising an operations computer arranged to perform unit trust processing functions, the operations computer being connected via a communications network to user interface devices, characterised in that,

the computer system includes at least two operations computers;

the operations computers are connected by a cluster controller to a cluster of fixed disc drives and back-up tape drives;

the computer system further comprises at least one control and development computer connected to the operations computers via the communications network for controlling access of enquiries or inputs for unit trust processing functions from the user interface devices to a selected operations computer, for programming and updating stored processing values for carrying out of unit trust operations on the selected operations computer, and for directing use of the or each other operations computer for word processing or batch processing functions;

the operations computers are connected to remote user interface devices by telecommunication lines and a series connection of a network server device, a multiplexer, an encryption device and a modem, and a corresponding series connection of a modem, encryption device and multiplexer at the remote end of the telecommunications line, the encryption device having means for coding and decoding of data transmitted on the line to prevent access of unauthorised persons to the transmitted data; and

the fixed disc drives include stored confidentiality databases, each associated with a user password, each database including directions as to whether or not the user may alter stored data and directions as to which stored information may be accessed by the user, the selected operations computer having means for directing accesses of the user only to allowed stored data.

The invention will be more clearly understood from the following description of a preferred embodiment thereof, given by way of example only with reference to the accompanying drawings in which:-

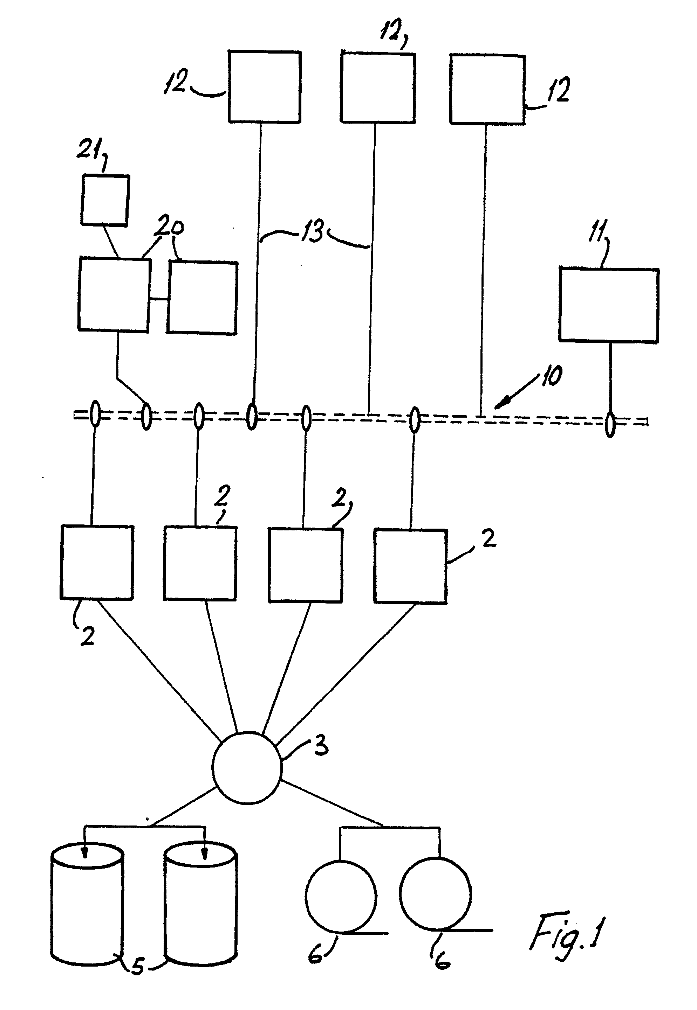

Fig. 1 is a block diagram of a computer system of the invention;

Fig. 2 in a block diagram of portion of the system;

Fig. 3 is a block diagram of a further portion of the system; and

Fig. 4 is a flow diagram illustrating operation of portion of the system.

Referring to the drawings, there is illustrated a computer system according to the invention indicated generally by the reference numeral 1. The computer system 1 comprises four operations computers 2 interconnected by a cluster controller, namely a star network 3 having four nodes. Two of the computers 2 are of 64 Mbytes memory capacity and four m.i.p.s. (million instructions per second) processing capacity, the other two being of 32 Mbyte memory capacity and 1.6 m.i.p.s. processing capacity. The operations computers 2 are connected via the star network 3 to two fixed drives 5 and to two back- up tape drives 6, having a combined memory capacity of 5 Gbytes.

The operations computers 2 are connected by a communications network 10 to user interface devices in an in-house user system 11, and in remote user systems 12. Direct cable connections are used for the in-house user system 11 and leased or switched telecommunication lines are used for the remote user systems 12.

In addition to the operations computers 2, the data processing system 1 also includes development computers 20 having memory discs 21 for carrying out development work including coding of programs, controlling access to the operations computers 2 and developing and enhancing the structure of databases of the operations computers 2. Such work is carried out via the network 10.

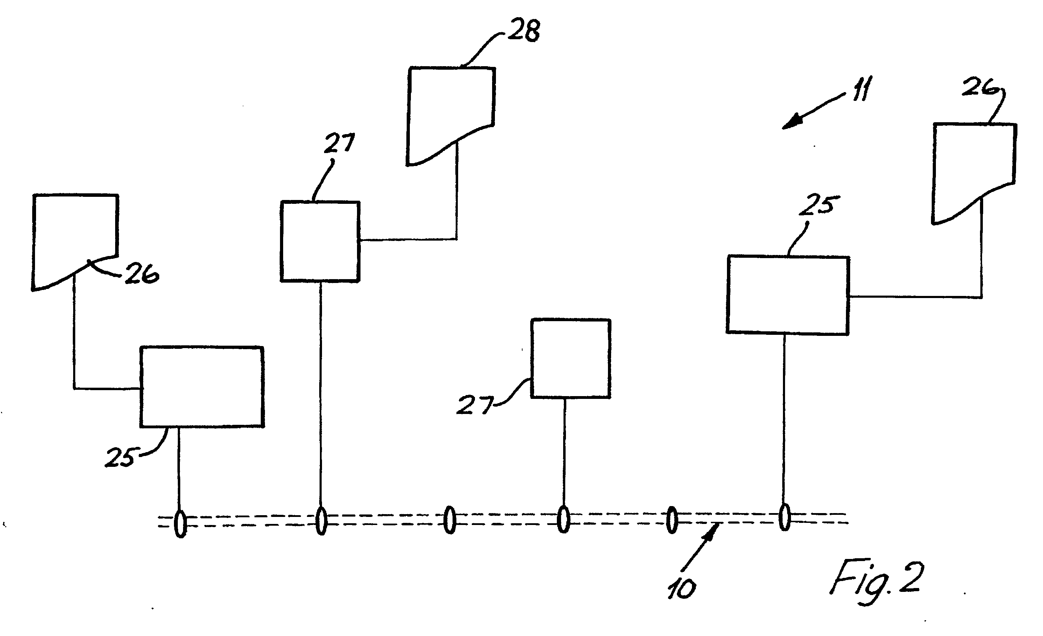

Referring now to Fig. 2, the in-house user system 11 is illustrated in more detail. The user system 11 comprises a number of micro-computers 25 having associated printers 26, and a number of terminals 27, some of which have associated printers 28. There are also printers 29 connected directly to the network 10.

In operation, two of the operations computers 2 perform on-line applications processing functions, a third is used for batch processing of reports and a fourth carries out word processing functions. Each operations computer 2 has access via the star network 3 to the other operations computers 2 to allow transfer of data if the functions of an operations computer are to be transferred to another operations computer as directed by the development computers 20. Further, any of the operations computers 2 may access the fixed disc drives 5 and tape drives 6 for access to stored data. The network 10 is arranged by the development computers 20 to direct user access to whichever of the operations computers 2 is required.

In this case, at any time one of the operations computers 2 which carries out on-line applications processing functions is arranged to carry out unit trust processing functions. The selected operations computer 2 is accessed via the network 10 by either the in-house or the remote user interfaces. The nature of the information being handled involves reception of contracts and accounts from branches of a bank, the processing of clients names and addresses, level of holdings and movement of holdings and the output of certificates, vouchers and prices of the various unit trusts. The outputs also include client reports, mailshots and responses to enquiries.

The word processing and batch processing functions mentioned above are also important for a unit trust system. The computer system 1 provides all of these functions in the one cluster of operations computers, each with equal access to memory. If a fault occurs functions of one computer may be written to the fixed disk drives 6 and read by the receiving computer. Development and adjustment work is carried out by the development computers 20. These features are very important for reliable and consistent operation of a unit trust system.

Divisions within a host investment bank generally carry out work for clients on a confidential basis whereby confidential information given to or required by one division, say Division A or an employee thereof (Employee A) is not disclosed or made available to another division, say Division B or an employee thereof (Employee B). Further, in some circumstances the confidential information is not available to other employees of a Division. From time to time, however it is necessary for Division A or Employee A to provide the confidential information to Employee B, and in making this information available to Employee B, Employee A is bringing Employee B across a "Chinese Wall". In such circumstances, Employee B, once given the confidential information, is an insider within the same Chinese Wall as Employee A and must therefore be subject to the same restrictions as regards use by him of the confidential information. Such confidential information may include the level of holdings of a certain client and movements of the holdings between different unit trusts and into or out of the unit trust. Restrictions in passing on of information either orally or in writing may be readily easily implemented, however, a major problem lies in preventing certain employees having access to confidential information stored in the operations computer 2.

A further problem is prevention of unauthorised outsiders from accessing the computer system 1 via telecommunications lines.

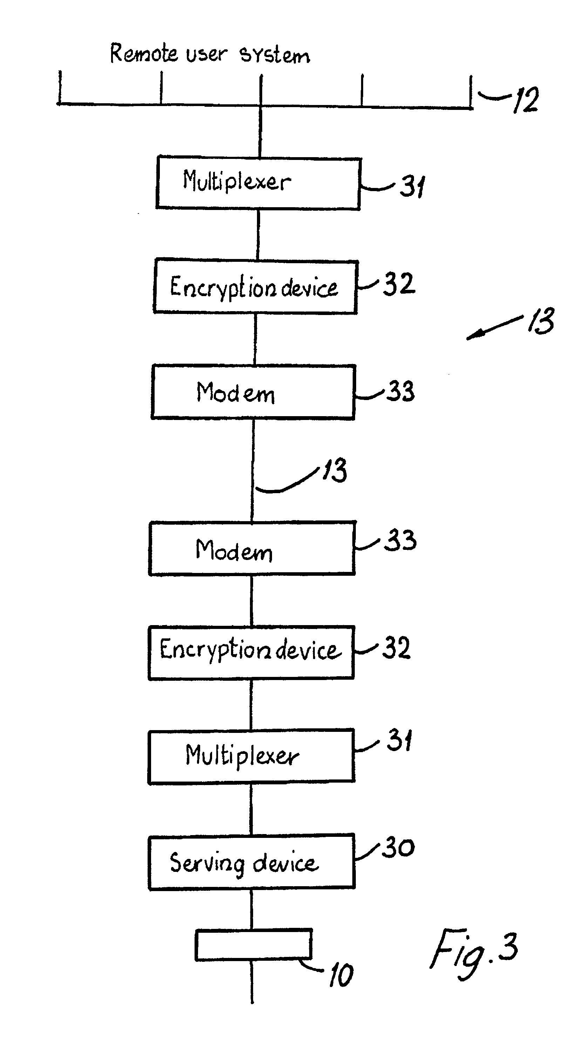

Referring now to Fig. 3, connection of the remote user system 12 to the network 10 is illustrated. A serving device 30 connects the network 10 to a multiplexer 31. The serving device 30 is of the type which allows access by up to eight user interface devices to the communications network 10, in this embodiment, a local area network. The serving device 30 provides for a user response time and throughput which is similar to that for user interface devices of the in-house user system 11.

The multiplexer 31 is in turn connected to a modem 33 via an encryption device 32. At the remote end, the leased line 13 is connected to a modem 33, which is in turn connected to a multiplexer 31 via an encryption device 32. The multiplexer 31 transmits the information in parallel form to the remote user system 12.

The operations computers 2 all have access via the star network 3 to the disc drives 5 and tape drives 6. Any of the operations computers 2 may be used for carrying out unit trust processing function and control of the manner in which the operations computers 2 are used is provided by the development computers 20. Further, the development computers 20 control access via the network 10 to the operations computers 2 and are used to carry out programming and development functions on the operations computers 2. It has been found that this arrangement provides complete versatility in batch processing of reports which may be carried out on one operations computer 2, the carrying out of everyday unit trust processing functions and the carrying out of various other work including word processing on a separate operations computer 2. The system is thus an integrated one which can perform all of the activities required in an investment bank while allowing complete versatility. Versatility is extremely important as the unit trust information must be available at all times.

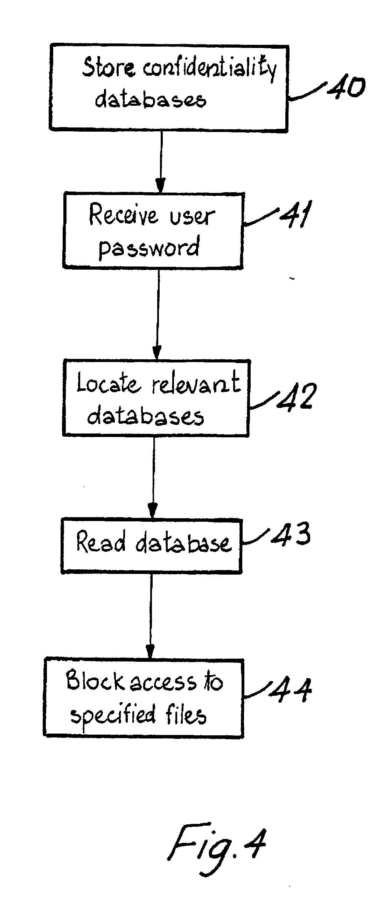

Referring now to Fig. 4, operation of the system 1 to maintain confidentiality is illustrated. In step 40, confidentiality databases are permanently stored on the fixed disc drives 5 and back-up tape drives 6, each including information relating to the type of information which may be accessed by an employee and whether enquiries only, or enquiries and inputs are allowed. The stored information includes the division within the organisation within which the employee works, and a list of clients for whom he or she is authorised to work and to view confidential information. Thus, when an employee logs in (step 41), the associated employee database is retrieved in step 42 by the operations computer 2. The database is read in step 43 and the computer 2 then allows accesses of that employee to information as directed in the confidentiality database. When an employee changes division within an organisation or becomes privy to confidential information the relevant database is amended to change the allowed accesses.

When information is transmitted to a remote user via telecommunication lines, confidentiality is ensured by use of the encryption devices 32 which prevent unauthorised disclosure and alteration of transmitted data. Using an algorithm, it encrypts and decrypts data at synchronous speeds up to 64 K bps, and asynchronous speeds up to 19.2 K bps.

It will thus be appreciated that the invention provides for confidentiality both within and without the host organisation in a unit trust system without the disadvantages of having separate computer installations or restricted access to hardware of the system. Thus, the computer installations may be used to the maximum efficiency while ensuring versatility in use of the operations computers without wasteful redundancy. The processing power of the operations computers 2 is available for any of the functions required in a unit trust processing system, without compromising confidentiality.

## Claims

1. A computer system (1) comprising an operations computer (2) arranged to perform unit trust processing functions, the operations computer (2) being connected via a communications network (10) to user interface devices (11,12), characterised in that,

the computer system (1) includes at least two operations computers (2);

the operations computers (2) are connected by a cluster controller (3) to a cluster of fixed disc drives (5) and back-up tape drives (6);

the computer (1) system further comprises at least one control and development computer (20) connected to the operations computers (2) via the communications network (10) for controlling access of enquiries or inputs for unit trust processing functions from the user interface devices (11,12) to a selected operations computer (2), for programming and updating stored processing values for carrying out of unit trust operations on the selected operations computer (2), and for directing use of the or each other operations computer for word processing or batch processing functions;

the operations computers (2) are connected to remote user interface devices (12) by telecommunication lines (13) and a series connection of a network server device (30), a multiplexer (31), an encryption device (32) and a modem (33), and a corresponding series connection of a modem (33), encryption device (32) and multiplexer (31) at the remote end of the telecommunication line (13), the encryption device (32) having means for coding and decoding of data transmitted on the line (13) to prevent access of unauthorised persons to the transmitted data; and

the fixed disc drives (5) include stored confidentiality databases, each associated with a user password, each database including directions as to whether or not the user may alter stored data and directions as to which stored information may be accessed by the user, the selected operations computer (2) having means for directing accesses of the user only to allowed stored data.

2. A computer system substantially as hereinbefore described with reference to the accompanying drawings.

Fig.1

Fig. 2

EP 0 434 876 A1

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATAMATION, vol. 22, no. 7, July 1976, pages 54-56, Barrington, US; J.D. FOSTER: "Distributive processing for banking" <br> * Page 54, left-hand column, line 1 - page 56, left-hand column, line 12 * | 1 | G 06 F 15/30 |
| A | EVOLUTIONS IN COMPUTER COMMUNICATIONS, PROCEEDINGS OF THE FOURTH INTERNATIONAL CONFERENCE ON COMPUTER COMMUNICATION, Kyoto, 26th-29th September 1978, pages 467-472, North-Holland Publishing Co., Amsterdam, NL; Y. YOSHINO et al.: "New data communication system for nationwide banking activities and development of its software" <br> * Page 467, section 2.0 - page 468, section 2.3, paragraph (B) * | 1 | |
| A | US-A-4 376 978 (MERRILL LYNCH PIERCE, FENNER & SMITH) <br> * Column 1, line 9 - column 9, line 66; figures * | 1 | TECHNICAL FIELDS SEARCHED (Int. Cl.5) |
| D,A | EP-A-0 278 132 (COLLEGE SAVINGS BANK) <br> * Page 2, line 4 - page 5, line 40; figures * | 1 | G 06 F 15/30 <br> G 06 F 15/24 |
| A | EP-A-0 068 805 (VISA USA) <br> * Page 6, line 10 - page 10, line 14 * | | |

The present search report has been drawn up for all claims

| Place of search | Date of completion of the search | Examiner |
|---|---|---|
| THE HAGUE | 17-07-1990 | CHUGG D.J. |

EPO FORM 1503 03.82 (P0401)